(19) **Europäisches Patentamt**

**European Patent Office**

**Office européen des brevets**

(11) **EP 1 614 922 A2**

(12) **EUROPÄISCHE PATENTANMELDUNG**

(43) Veröffentlichungstag:
**11.01.2006 Patentblatt 2006/02**

(51) Int Cl.:
**F16D 48/06** (2006.01)

(21) Anmeldenummer: **05014042.5**

(22) Anmeldetag: **29.06.2005**

(84) Benannte Vertragsstaaten:
**AT BE BG CH CY CZ DE DK EE ES FI FR GB GR HU IE IS IT LI LT LU MC NL PL PT RO SE SI SK TR**
Benannte Erstreckungsstaaten:
**AL BA HR LV MK YU**

(30) Priorität: **06.07.2004 DE 102004032623**

(71) Anmelder: **LuK Lamellen und Kupplungsbau Beteiligungs KG**
**77815 Bühl (DE)**

(72) Erfinder:
• **Jung, Mario**
  **76547 Sinzheim (DE)**
• **Schweizer, Alexander**
  **77815 Bühl (DE)**
• **Küpper, Klaus, Dr.**
  **77815 Bühl (DE)**

(74) Vertreter: **Duschl, Edgar Johannes**
**LuK GmbH & Co. oHG**
**Bussmatten 2**
**77815 Bühl (DE)**

(54) **Verfahren und Vorrichtung zum Referenzieren eines Inkrementalwegsensors in einer elektronisch gesteuerten Betätigungsvorrichtung einer Kupplung**

(57) Ein Verfahren zum Referenzieren eines Inkrementalwegsensors (23) in einer elektronisch gesteuerten Betätigungsvorrichtung (20) einer Kupplung (22) im Antriebsstrang eines fahrenden Fahrzeugs, wobei das Steuergerät (24) einen Speicher enthält, in dem eine Kennlinie gespeichert ist, die das Kupplungsmoment (MK) abhängig von der Stellung (x) eines Betätigungselements (20) angibt, enthält unter anderem folgende Schritte:

- Bestimmen, ob die Kupplung (22) überschwellig schlupft; falls ja
- Bestimmen des aktuellen Kupplungsmoments (MK) und
- Bestimmen der aktuellen Stellung (x) des Betätigungselements (20) aus dem aktuellen Kupplungsmoment (MK) und der Kennlinie.

Es werden weitere Verfahren angegeben, die eine bedarfsgerechte Referenzierung ermöglichen.

Fig. 3

EP 1 614 922 A2

**Beschreibung**

Die Erfindung betrifft ein Verfahren und eine Vorrichtung zum Referenzieren eines Inkrementalwegsensors in einer elektronisch gesteuerten Betätigungsvorrichtung einer Kupplung im Antriebsstrang eines Fahrzeugs.

Automatische Kupplungen finden in jüngerer Zeit nicht nur aus Komfortgründen, sondern auch aus Gründen der Verbrauchseinsparung zunehmend Verwendung in Kraftfahrzeugen. Betätigungsvorrichtungen solcher automatisierter Kupplungen enthalten häufig einen Inkrementalsensor, der inkremental den Weg eines Betätigungsgliedes der Kupplung oder die Drehung eines Aktors, beispielsweise Elektromotors, erfasst. Für eine genaue Steuerung bzw. Regelung der Kupplungsbetätigung ist eine genaue Kenntnis der Stellung des Betätigungsgliedes erforderlich, da die Kupplung in den meisten Anwendungsfällen derart angesteuert wird, dass sie ein vorbestimmtes, von der Stellung des Betätigungsgliedes abhängiges Moment übertragen kann. Dieses Kupplungsmoment ist in einem elektronischen Speicher als Kennlinie abhängig von der Stellung des Betätigungsgliedes abgelegt. Es ist daher erforderlich, das Signal des Inkrementalsensors von Zeit zu Zeit abzugleichen bzw. zu referenzieren, d.h., das Betätigungsglied auf einen Bezugs- bzw. Referenzwert einzustellen, auf den die Zählung des Inkrementalsensors dann bezogen werden kann. Diese Referenzierung geschieht normalerweise an einem Anschlag. In der DE 199 53 292 A1 wird ein Verfahren beschrieben, bei dem in Abhängigkeit verschiedener Eingangssignale entschieden wird, ob die Referenzierung der Inkrementalwegmessung bei geschlossener oder bei geöffneter Kupplung geschehen soll.

Die Referenzierung eines Kupplungsaktors an einem Anschlag setzt voraus, dass je nach Auslegung der Betätigung der Kupplung, die in unterschiedlicher Weise erfolgen kann, die Kupplung entweder vollständig geschlossen oder vollständig geöffnet werden muss. Dieses vollständige Schließen oder öffnen der Kupplung ist nur in bestimmten Situationen möglich, so dass zeitliche Verzögerungen zwischen Anforderung und dem Ausführen einer Referenzierung unabwendbar sind.

Der Erfindung liegt die Aufgabe zugrunde, ein Verfahren und eine Vorrichtung zu dessen Durchführung anzugeben, das bzw. die ein Referenzieren möglichst anforderungsnah zulässt.

Eine erste Lösung dieser Aufgabe wird mit einem Verfahren zum Referenzieren eines Inkrementalsensors in einer elektronisch gesteuerten Betätigungsvorrichtung einer Kupplung im Antriebsstrang eines fahrenden Fahrzeugs erzielt, welche Betätigungsvorrichtung einen Speicher enthält, in dem eine Kennlinie gespeichert ist, die das Kupplungsmoment abhängig von der Stellung eines Betätigungselements angibt, welches Verfahren folgende Schritte enthält:

- Bestimmen, ob die Kupplung überschwellig schlupft; falls ja

- Bestimmen des aktuellen Kupplungsmoments und

- Bestimmen der aktuellen Stellung des Betätigungselements aus dem aktuellen Kupplungsmoment und der Kennlinie.

Mit dem vorgenannten Verfahren kann der Inkrementalwegsensor zumindest grob auch bei fahrendem Fahrzeug referenziert werden.

Mit Vorteil wird das aktuelle Kupplungsmoment nach folgender Beziehung bestimmt:

$$MK = \left| MM - J \times \dot{\omega} \right|$$

mit

MK = Kupplungsmoment

MM = Motormoment

J = Trägheitsmoment des Motors und

$\dot{\omega}$ = zeitliche Drehzahländerung des Motors

Der Schlupf wird vorteilhafterweise durch einen Vergleich einer kupplungseingangsseitigen Motordrehzahl mit einer kupplungsausgangsseitigen Getriebeeingangsdrehzahl ermittelt.

Während die Motordrehzahl normalerweise unmittelbar zur Verfügung steht, ist ein Sensor für die Getriebeeingangsdrehzahl nicht immer vorhanden. In diesem Fall kann die Getriebeeingangsdrehzahl aus der augenblicklichen Getriebeübersetzung, der Achsübersetzung und der augenblicklichen Fahrzeuggeschwindigkeit ermittelt werden.

Vorteilhaft ist, das aktuelle Soll-Kupplungsmoment nach Ermittlung des aktuellen Kupplungsmoments auf dieses aktuelle Kupplungsmoment zu setzen, damit im Kupplungsmoment kein Sprung auftritt.

Eine weitere Lösung der Erfindungsaufgabe wird mit einem Verfahren zum Referenzieren eines Inkrementalwegsensors in einer elektronisch gesteuerten Betätigungsvorrichtung einer Kupplung im Antriebsstrang eines fahrenden Fahrzeugs erzielt, welches Verfahren folgende Schritte enthält:

- Bestimmen, ob die Kupplung überschwellig schlupft; falls nein

- Bestimmen, ob ein Gang eingelegt ist; falls ja

- Kupplung voll schließen, bis die Betätigungsvorrichtung einen Schließ-Referenzanschlag erreicht.

Das vorgenannte Verfahren ist bei fahrendem Fahrzeug durchführbar, wenn die Kupplung nur gering schlupft.

Eine weitere Lösung der Erfindungsaufgabe wird mit einem Verfahren zum Referenzieren eines Inkrementalwegsensors in einer elektronisch gesteuerten Betätigungsvorrichtung einer Kupplung im Antriebsstrang eines fahrenden Fahrzeugs, welches Verfahren folgende Schritte enthält:

- Bestimmen, ob die Kupplung überschwellig schlupft; falls nein

- Bestimmen, ob ein Gang eingelegt ist; falls nein

- Kupplung voll öffnen oder schließen, bis die Betätigungsvorrichtung einen Referenzanschlag erreicht.

Ein unterschwelliger Schlupfzustand kann beispielsweise herbeigeführt werden, indem das Motormoment vermindert wird.

Damit nach einem Reset eine rasche Referenzierung möglich ist, ist es vorteilhaft, einen aktuellen Gang in einem EEPROM der Betätigungsvorrichtung nach Änderung des Gangs jeweils zu speichern.

Dabei ist weiter vorteilhaft, vor Beginn des Auslegens eines alten Ganges ein Zusatzsignal auf "kein-Gang" zu setzen und nach Einlegen eines neuen Gangs auf "Gang" zu setzen.

Eine weitere Lösung der Erfindungsaufgabe liegt in einem Verfahren zum Referenzieren eines Inkrementalwegsensors in einer elektronisch gesteuerten Betätigungsvorrichtung einer Kupplung sowie wenigstens eines weiteren Inkrementalwegsensors in einer elektronisch gesteuerten Betätigungsvorrichtung eines Getriebes in einem Fahrzeugantriebsstrang nach einem Reset, insbesondere Unterspannungsreset, welches Verfahren folgende Schritte enthält:

- vollständiges Öffnen der Kupplung und Referenzieren des der Kupplungsbetätigungsvorrichtung zugeordneten Inkrementalwegsensors in der voll geöffneten Stellung der Kupplung,

- Beibehalten der voll geöffneten Stellung der Kupplung und Referenzieren des (der) der Getriebebetätigungsvorrichtung zugeordneten Inkrementalwegsensors(en),

- Schalten des Getriebes in Neutralstellung und

- vollständiges Schließen der Kupplung und Referenzieren des der Kupplungsbetätigungsvorrichtung zugeordneten Inkrementalwegsensors in der voll geschlossenen Stellung der Kupplung.

Die erfindungsgemäßen Verfahren sind nicht nur an automatisierten Kupplungen von Handschaltgetrieben, automatisierten Handschaltgetrieben, automatischen Getrieben oder Getrieben mit stufenlos veränderbarer Übersetzung einsetzbar, sondern auch an Parallelschaltgetrieben bzw. Doppelkupplungsgetrieben, bei denen jeweils durch Schließen einer Kupplung einer von zwei Getriebezweigen aktiviert wird, so dass der andere Getriebezweig bei offener Kupplung geschaltet werden kann.

Der auf die Vorrichtung gerichtete Teil der Erfindungsaufgabe wird mit einer Vorrichtung zum Referenzieren eines Inkrementalsensors in einer elektronisch gesteuerten Betätigungsvorrichtung einer Kupplung im Antriebsstrang eines Fahrzeugs gelöst, welche Betätigungsvorrichtung einen Mikroprozessor mit einer Speichereinrichtung enthält, in der eine Kennlinie gespeichert ist, die das Kupplungsmoment abhängig von der Stellung eines Betätigungselements angibt, und an den der Inkrementalsensor, weitere Sensoren und wenigstens einen Aktor der Betätigungseinrichtung angeschlossen sind, wobei in der Speichereinrichtung Programme derart enthalten sind, dass die Vorrichtung wenigstens eines der Verfahren nach einem der vorgenannten Ansprüche ausführt.

Die Erfindung wird im Folgenden anhand schematischer Zeichnungen beispielsweise und mit weiteren Einzelheiten erläutert.

In den Figuren stellen dar:

Fig. 1        ein Prinzip einer Kupplungsbetätigungsvorrichtung,

Fig. 2        eine in einem Speicher des Steuergerätes gemäß Figur 1 gespeicherte Momentkennlinie, und

Fig. 3 bis 5  Flussbilder zur Erläuterung der erfindungsgemäßen Verfahren.

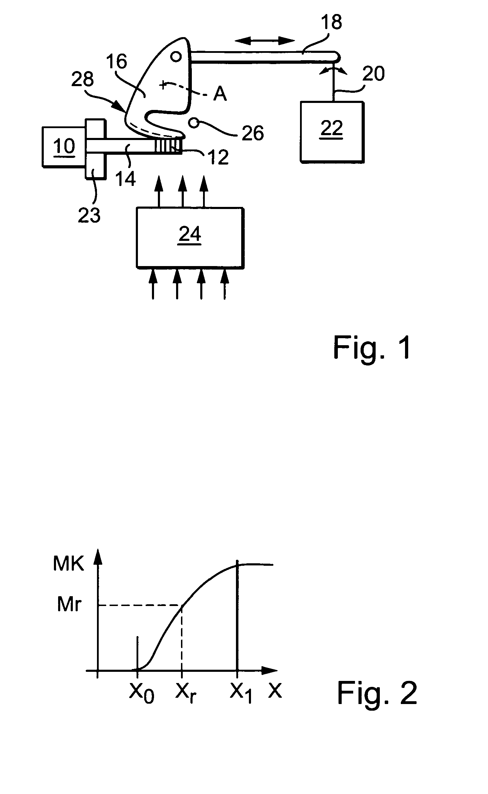

Gemäß Figur 1 weist eine in ihrem Aufbau an sich bekannte Betätigungsvorrichtung für eine Kupplung einen Aktor 10, beispielsweise einen Elektromotor, auf, der eine mit einer Schneckenverzahnung 12 versehene Spindel 14 drehantreibt. Die Schneckenverzahnung 12 greift in eine Verzahnung eines Segmentrades 16 ein, das um eine Achse A schwenkbar gelagert ist und an dem ein Übertragungsglied 18 gelagert ist, das mit einem Stellglied 20 einer Kupplung 22, beispielsweise einem Ausrückhebel verbunden ist.

Die Drehung der Spindel 14 wird von einem Inkrementalsensor 23, im dargestellten Beispiel ein Inkrementalwinkelsensor, erfasst, dessen Impulse einem elektronischen Steuergerät 24 zugeführt werden. Das Segmentrad 16 ist um einen Winkelbereich schwenkbar, der durch Anschläge 24 und 26 begrenzt ist, wobei der eine Anschlag der voll eingerückten Stellung der Kupplung 22 und der andere Anschlag der voll ausgerückten Stellung der Kupplung 22 entspricht. Das Erreichen eines Anschlags ist vom Steuergerät, das den Aktor 10 steuert, jeweils dadurch erkennbar, dass trotz mit Strom beaufschlagtem Aktor der Inkrementalsensor 23 keine Impulse mehr abgibt. Auf diese Weise können die Endstellungen der Kupplung bzw. das Stellglied 20 referenziert werden.

Eingänge des Steuergerätes sind mit weiteren Sensoren des nicht dargestellten Antriebsstrangs verbunden, wie einem Sensor zur Erfassung der Drehzahl eines Antriebsmotors des Antriebsstrangs, einem Sensor zur Erfassung der Übersetzung des nicht dargestellten Getriebes, einem Sensor zur Erfassung der Drehzahl einer Getriebeeingangswelle, einem Sensor zur Erfassung der Geschwindigkeit des Fahrzeugs usw. Ausgänge des Steuergerätes 24 steuern den Aktor 10 sowie weitere Aktoren, beispielsweise einen Wählaktor und einen Schaltaktor eines automatisierten Handschaltgetriebes.

Der Aufbau und die Funktion der beschriebenen Anordnung sind an sich bekannt und werden daher nicht erläutert.

Figur 2 zeigt eine in einem Speicher des Steuergerätes 24 abgelegte Kupplungsmomentkennlinie, wobei die Abszisse die Stellung x des Stellgliedes 20 und die Ordinate das jeweils übertragbare Kupplungsmoment MK angibt. Die Stellung x0 entspricht der voll geöffneten Stellung der Kupplung, die Stellung x1 entspricht der voll geschlossenen Stellung der Kupplung.

Der Zählstand des Inkrementalsensors 23, der am Steuergerät 24 ausgewertet wird und der einer bestimmten Stellung des Segmentrades 16 entspricht, kann sich im Betriebsverlauf in Folge unterschiedlicher Einflüsse, beispielsweise Verschleiß, Temperatur usw. ändern, oder muss beispielsweise nach einem Reset neu eingelesen bzw. abgeglichen werden.

Für eine präzise Steuerung der Kupplung ist wichtig, die augenblickliche Zuordnung zwischen übertragbarem Kupplungsmoment MK und der Stellung des Stellgliedes 20 genau zu kennen. Ein Anfahren der Anschläge 26 oder 28 ist nur in bestimmten Betriebszuständen des Fahrzeugs möglich, ohne dass der Fahrzeugbetrieb beeinträchtigt wird.

Erfindungsgemäß ist vorgesehen, in Schlupfphasen das aktuelle Kupplungsmoment MK nach der folgenden Beziehung zu bestimmen:

$$MK = \left| MM - J \times \dot{\omega} \right|,$$ wobei MM das augenblickliche Moment des die Eingangsseite der Kupplung beaufschlagenden Antriebsmotors, beispielsweise eines Verbrennungsmotors, ist, J das Trägheitsmoment des Verbrennungsmotors ist und $\dot{\omega}$ die zeitliche Änderung der Drehzahl der Kurbelwelle des Verbrennungsmotors bzw. die Beschleunigung der Kurbelwelle ist.

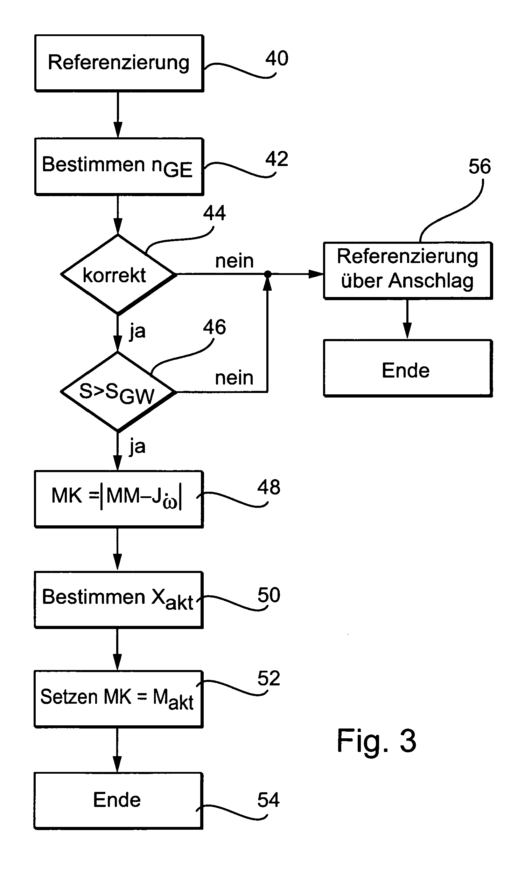

Anhand des Flussdiagramms der Figur 3 wird der Ablauf einer Referenzierung erläutert:

Im Schritt 40 startet ein im Steuergerät 24 abgelegtes Programm eine Referenzierung. Im Schritt 42 wird die Eingangsdrehzahl des Getriebes nGE bestimmt, die gleichzeitig die Abtriebsdrehzahl der Kupplung ist. Im Schritt 44 wird anhand von Plausibilitäten, beispielsweise der ermittelten Fahrzeuggeschwindigkeit, der augenblicklichen Getriebeübersetzung und der Achsübersetzung (aus diesen Größen kann die Getriebeeingangsdrehzahl ebenfalls bestimmt werden) überprüft, ob die Getriebeeingangsdrehzahl nGE korrekt ermittelt wurde. Ist dies der Fall, so schreitet das Programm zum Schritt 46 fort, in dem überprüft wird, ob der Schlupf S größer als ein Schlupfgrenzwert SGW ist. Der Schlupf wird durch Vergleich der Motordrehzahl, die gleichzeitig die Kupplungseingangsdrehzahl ist, mit der Getriebeeingangsdrehzahl ermittelt. Liegt der Schlupf über dem Schlupfgrenzwert SGW, so wird im Schritt 48 anhand der Formel $MK = \left| MM - J \times \dot{\omega} \right|$ das übertragbare Kupplungsmoment MK ermittelt. Das Motormoment wird einem im Steuergerät abgelegten Motorkennfeld entnommen, in dem das Motormoment abhängig von der Stellung eines Leistungsstellgliedes und der Drehzahl des Motors sowie ggf. weiteren Einflussgrößen abgelegt ist.

Im Schritt 50 wird dann anhand der Kupplungsmomentkennlinie (Figur 2) aus dem im Schritt 48 bestimmten übertragbaren Kupplungsmoment MK, das in Figur 2 als Mr (Referenzmoment) bezeichnet ist, die aktuelle Stellung xakt des Kupplungsbetätigungsgliedes (in Figur 2 mit xr, Referenzstellung bezeichnet) bestimmt. Die aktuelle Stellung xr kann nun als Referenzstellung verwendet werden, auf die die Zählung des Inkrementzählers 22 (Figur 1) bezogen wird. Das in einem Programm des Steuergerätes 24 abgelegte, jeweils anzufahrende Kupplungsollmoment wird auf das im Schritt 48 bestimmte aktuelle Kupplungsmoment eingestellt, wodurch ein Sprung im Kupplungsmoment bzw. eine sprunghafte Betätigung der Kupplung vermieden werden kann.

Für den Fall, dass keine Getriebeeingangsdrehzahl nGE bestimmt werden kann (nein im Schritt 44), oder dass der im Schritt 46 ermittelte Schlupf S kleiner oder gleich dem Schlupfgrenzwert SGW ist, schreitet das Programm zum Schritt 56, in dem wie folgt verfahren werden kann:

Wenn ein Gang eingelegt ist und der Schlupf kleiner ist als der Schlupfgrenzwert SGW, kann die Kupplung völlig geschlossen werden, bis im Beispiel der Figur 1 der der voll geschlossenen Stellung der Kupplung entsprechende der Anschläge 26 und 28 angefahren ist. Diese Position dient als neue Referenzposition.

Um den Schlupf bei Bedarf unter den Schlupfgrenzwert zu bringen, kann der Schlupf S durch einen Motoreingriff, z.B. durch entsprechende Ansteuerung eines Aktors eines Laststellgliedes, mittels des Steuergerätes 24 auf einen Wert kleiner als der Grenzwert vermindert werden. Wenn während der Verminderung des Motormomentes das Kupplungsmoment konstant gehalten wird, sinkt der Schlupf und es kann eine Referenzierung durch Anfahren des der voll geschlossenen Kupplung entsprechenden Anschlags erfolgen. Das Fahrzeug verliert dabei zwar augenblicklich an Zugkraft; dieser Zugkraftverlust ist jedoch wesentlich kleiner als der mit einem vollständigen öffnen der Kupplung und Anfahren des entsprechenden anderen Anschlags verbundene Zugkraftverlust. Des weiteren muss kein Gang ausgelegt werden, so dass die volle Zugkraft rasch wieder hergestellt werden kann.

Für den Fall, dass die Getriebeeingangsdrehzahl nicht bestimmt werden kann, kann die Kupplung bis zu einem der Anschläge betätigt werden. Anschließend kann eine Referenzfahrt in Neutralstellung des Getriebes durchgeführt werden, wobei sichergestellt wird, dass kein Gang eingelegt ist und die Getriebesensorik abgeglichen werden kann. Danach kann die Betätigungsvorrichtung der Kupplung durch Anfahren des voll geschlossenen oder des voll geöffneten Anschlags referenziert werden.

Bei einem Parallelschaltgetriebe muss der Abgleich, falls keine weiteren Informationen bekannt sind oder die Gültigkeit der Informationen nicht gewährleistet ist, wie folgt geschehen:

Beide Kupplungen werden tastend geöffnet. Dabei werden die Kupplungen zeitgleich oder zeitlich versetzt in Richtung Öffnen betätigt. Dabei wird die Bewegung beobachtet. Findet in Folge eines Anschlags keine Bewegung mehr statt, so wird das Öffnen beendet. Durch Kenntnis des Systems kann nun davon ausgegangen werden, dass die Kupplungen offen sind, d.h. der Triebstrang offen ist.

Anschließend wird eine Neutralreferenzfahrt durchgeführt, bei der der Triebstrang durch das Öffnen der Kupplungen offen ist, so dass im Getriebe beliebige Bewegungen durchgeführt werden können. Mit Hilfe der Neutralreferenzfahrt wird im Getriebe tastend verfahren und zu Referenzzwecken eine definierte Position angefahren. Dabei kann die Getriebesensorik abgeglichen werden. Anschließend können beide Kupplungen an einem beliebigen ihrer Anschläge abgeglichen bzw. referenziert werden.

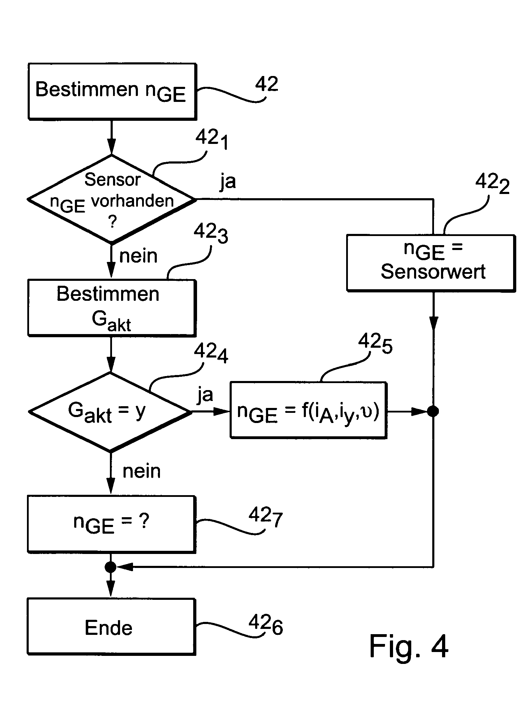

Anhand der Figur 4 wird im Folgenden erläutert, wie die Getriebeeingangsdrehzahl nGE bestimmt werden kann:

Im Schritt 421 wird festgestellt, ob ein Sensor zur Erfassung der Getriebeeingangsdrehzahl vorhanden ist. Ist dies der Fall, so wird im Schritt 422 die Getriebeeingangsdrehzahl nGE unmittelbar aus dem Sensorsignal abgeleitet.

Fehlt der Sensor, so wird im Schritt 423 der aktuelle Gang des Getriebes bestimmt und im Schritt 424 überprüft, ob der aktuell eingelegte Gang Gakt sicher als Gang y bestimmt werden konnte. Falls ja, wird im Schritt 425 die Getriebeeingangsdrehzahl aus der Fahrzeuggeschwindigkeit v, der Achsübersetzung iA und der aktuellen Gangübersetzung iy errechnet, so dass auf diesem Weg die Getriebeeingangsdrehzahl nGE ebenfalls ermittelt wird und die Bestimmung der Getriebeeingangsdrehzahl nGE im Schritt 426 endet.

Wird im Schritt 424 festgestellt, dass der augenblicklich geschaltete Gang nicht mit Sicherheit festgestellt werden kann, so wird im Schritt 427 festgelegt, dass über den Weg 423 und 424 die Getriebeeingangsdrehzahl nGE nicht bestimmt werden kann.

Es versteht sich, dass die Ergebnisse der Schritte 422 und 425 im Schritt 44 miteinander verglichen werden können, so dass die ermittelte Getriebeeingangsdrehzahl nGE mit Sicherheit als korrekt festgestellt werden kann.

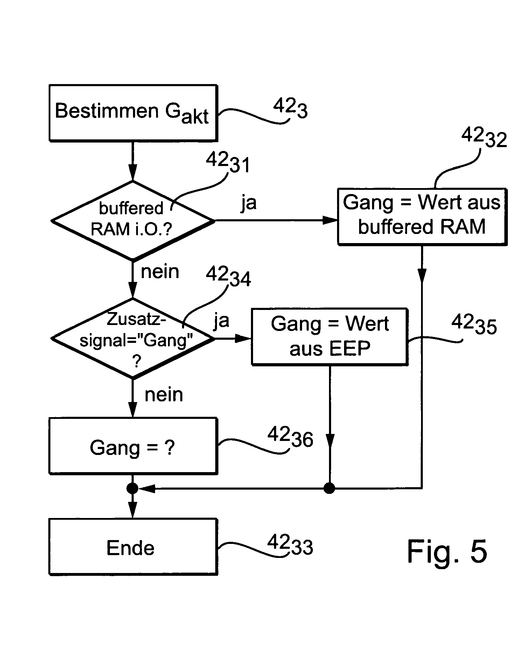

Anhand der Figur 5 wird im Folgenden erläutert, wie der aktuelle Gang Gakt im Schritt 423 bestimmt werden kann:

Normalerweise ist der aktuelle Gang aus einem am Getriebe angebrachten Gangstellungssensor bekannt. Nach einem Reset, beispielsweise infolge einer Unterspannung, auf den hin eine Referenzierung erfolgen muss, muss auch der Gangstellungssensor neu referenziert werden, so dass von dort der augenblicklich geschaltete Gang nicht bekannt ist. Der RAM-Bereich eines in dem Steuergerät 24 enthaltenen Speichers hat häufig einen speziellen Bereich "Buffered RAM", dessen Inhalt bei einem Reset erhalten bleibt und auf Richtigkeit überprüft wird. Bei einem Reset durch Unterspannung wird jedoch auch das Buffered RAM gelöscht. Um dann den aktuellen Gang bestimmen zu können, wird dieser nach jeder Änderung des Ganges im EEPROM gespeichert. Um bei Anforderung eines Abgleichs einer Referenzierung nach einem Unterspannungsreset entscheiden zu können, ob der im EEPROM gespeicherte Wert gültig ist, ist ein weiteres Signal erforderlich. Dieses weitere Signal wird immer vor Beginn des Auslegens des alten Ganges auf "keinGang" gesetzt und auf "Gang" gesetzt, sobald der neue Gang vollständig eingelegt ist und seine Nummer im EEPROM gespeichert wurde.

Gemäß Figur 5 wird im Schritt 4231 überprüft, ob der Bereich Buffered RAM in Ordnung ist. Ist dies der Fall, so wird im Schritt 4232 der im Buffered RAM gespeicherte Gang als aktueller Gang ausgelesen und das Gangbestimmungsprogramm schreitet zum Ende 4233. Ist der Buffered RAM nicht in Ordnung (beispielsweise gelöscht), so wird im Schritt 4234 festgestellt, ob das Zusatzsignal auf Gang gesetzt ist. Beispielsweise beträgt der Wert des auf "Gang" gesetzten Zusatzsignals 1 und der Wert des auf "keinGang" gesetzten Zusatzsignals 0. Steht das Zusatzsignal auf "Gang", so wird im Schritt 4235 der aktuelle Gang aus dem EEProm ausgelesen und das Programm wird beendet.

Wird im Schritt 4234 festgestellt, dass das Zusatzsignal auf "keinGang" steht, so wird im Schritt 4236 festgestellt, dass eine sichere Gangbestimmung nicht möglich ist und somit die Getriebeeingangsdrehzahl im Schritt 427 (Figur 4) nicht ermittelt werden kann.

Mit den vorstehend beispielhaft geschilderten Verfahren ist weitestgehend eine im Bedarfsfall rasche Referenzierung bzw. ein rascher Abgleich der Betätigungsvorrichtung möglich.

Die geschilderten Verfahren können nicht nur bei einem Getriebe mit einer einzigen Kupplung angewendet werden, sondern auch bei Parallelschaltgetriebesystemen:

Um bei Parallelschaltgetrieben das Kupplungsmoment aus dem Motormoment und dem Produkt aus dem Trägheitsmoment des Motors und der Winkelbeschleunigung seiner Drehzahl bei überschwelligem Schlupf herzuleiten, müssen folgende Grundvoraussetzungen erfüllt sein:

- Eine der beiden Kupplungen muss offen sein, so dass das gesamte Motormoment über die andere, schlupfende Kupplung übertragen wird.
- In dem Getriebezweig, der der schlupfenden Kupplung nachgeordnet ist, muss ein Gang eingelegt sein.

Um zu jedem Zeitpunkt, insbesondere auch nach einem Reset entscheiden zu können, ob diese Grundvoraussetzungen erfüllt sind, können entsprechende Statusdaten im Buffered RAM und/oder EEPROM gespeichert werden. Um der Tatsache Rechnung zu tragen, dass das Speichern im EEPROM mehrere hundert Millisekunden dauern kann, ist es wichtig, immer zusätzlich eine Information zu speichern, die besagt, ob die im EEPROM gespeicherten Informationen gültig sind oder nicht. Bevor die Informationen im EEPROM verändert werden, muss deren Ungültigkeit angezeigt werden. Die Ungültigkeit darf jeweils erst nach der vollständigen Änderung zurückgenommen werden.

Bei einem Unterspannungsreset kennt ein System zur Betätigung einer automatischen Kupplung und eines automatischen Getriebes nicht mehr die Absolutstellungen der jeweiligen Betätigungsglieder, so dass eine Referenzierung erforderlich ist. Eine solche Referenzierung kann vorteilhafterweise dadurch vorgenommen werden, dass zunächst die Kupplung tastend geöffnet wird und der der Kupplungsbetätigung zugeordnete Inkrementalwegsensor bei vollständig geöffneter Kupplung referenziert bzw. abgeglichen wird. Anschließend kann bei vollständig offener Kupplung das Getriebe referenziert werden, indem dessen Referenzstellungen angefahren werden. Anschließend kann das Getriebe in seine Neutralstellung geschaltet werden und die geschlossene Stellung der Kupplung referenziert werden, so dass die Kupplungs- und die Getriebebetätigungsvorrichtung wieder voll einsatzfähig sind.

Die vorgenannte Referenzierung kann sowohl bei mit einer Kupplung arbeitenden automatischen Getrieben als auch bei Parallelschaltgetrieben verwendet werden, die beispielsweise mit zwei Kupplungen arbeiten.

Die vorgenannten Verfahren können in zweckentsprechender Weise miteinander kombiniert werden und es können Merkmale des einen Verfahrens in anderen Verfahren eingesetzt werden.

## Bezugszeichenliste

| | |
|---|---|
| 10 | Aktor |
| 12 | Schneckenverzahnung |
| 14 | Spindel |
| 16 | Segmentrad |
| 18 | Übertragungsglied |
| 20 | Stellglied |
| 22 | Kupplung |
| 23 | Inkrementalwegsensor |
| 24 | Steuergerät |
| 26 | Anschlag |
| 28 | Anschlag |

## Patentansprüche

1. Verfahren zum Referenzieren eines Inkrementalwegsensors in einer elektronisch gesteuerten Betätigungsvorrichtung einer Kupplung im Antriebsstrang eines fahrenden Fahrzeugs, welche Betätigungsvorrichtung einen Speicher enthält, in dem eine Kennlinie gespeichert ist, die das Kupplungsmoment abhängig von der Stellung eines Betätigungselements angibt, welches Verfahren folgende Schritte enthält:

   - Bestimmen, ob die Kupplung überschwellig schlupft; falls ja
   - Bestimmen des aktuellen Kupplungsmoments und
   - Bestimmen der aktuellen Stellung des Betätigungselements aus dem aktuellen Kupplungsmoment und der Kennlinie.

2. Verfahren nach Anspruch 1, wobei das aktuelle Kupplungsmoment nach folgender Beziehung bestimmt wird:

$$M_K = \left| M_M - J \times \dot{\omega} \right|$$

mit

   $M_K$ = Kupplungsmoment
   $M_M$ = Motormoment
   $J$ = Trägheitsmoment des Motors und
   $\dot{\omega}$ = zeitliche Drehzahländerung des Motors

3. Verfahren nach Anspruch 1 oder 2, wobei der Schlupf durch einen Vergleich einer kupplungseingangsseitigen Motordrehzahl mit einer kupplungsausgangsseitigen Getriebeeingangsdrehzahl ermittelt wird.

**4.** Verfahren nach Anspruch 3, wobei die Getriebeeingangsdrehzahl aus der augenblicklichen Getriebeübersetzung, der Achsübersetzung und der augenblicklichen Fahrzeuggeschwindigkeit ermittelt wird.

**5.** Verfahren nach einem der Ansprüche 1 bis 3, wobei nach Ermittlung des aktuellen Kupplungsmoments das aktuelle Soll-Kupplungsmoment auf das aktuelle Kupplungsmoment gesetzt wird.

**6.** Verfahren zum Referenzieren eines Inkrementalwegsensors in einer elektronisch gesteuerten Betätigungsvorrichtung einer Kupplung im Antriebsstrang eines fahrenden Fahrzeugs, welches Verfahren folgende Schritte enthält:

- Bestimmen, ob die Kupplung überschwellig schlupft; falls nein
- Bestimmen, ob ein Gang eingelegt ist; falls ja
- Kupplung voll schließen, bis die Betätigungsvorrichtung einen Schließ-Referenzanschlag erreicht.

**7.** Verfahren nach Anspruch 6, wobei ein unterschwelliger Schlupfzustand herbeigeführt wird, indem das Motormoment vermindert wird.

**8.** Verfahren zum Referenzieren eines Inkrementalwegsensors in einer elektronisch gesteuerten Betätigungsvorrichtung einer Kupplung im Antriebsstrang eines fahrenden Fahrzeugs, welches Verfahren folgende Schritte enthält:

- Bestimmen, ob die Kupplung überschwellig schlupft; falls nein
- Bestimmen, ob ein Gang eingelegt ist; falls nein
- Kupplung voll öffnen oder schließen, bis die Betätigungsvorrichtung einen Schließ-Referenzanschlag erreicht.

**9.** Verfahren nach einem der Ansprüche 1 bis 8, wobei ein aktueller Gang in einem EEPROM der Betätigungseinrichtung nach Änderung des Gangs gespeichert wird.

**10.** Verfahren nach Anspruch 9, wobei vor Beginn des Auslegens eines alten Gangs ein Zusatzsignal auf "keinGang" gesetzt wird und nach Einlegen eines neuen Gangs auf "Gang" gesetzt wird.

**11.** Verfahren zum Referenzieren eines Inkrementalwegsensors in einer elektronisch gesteuerten Betätigungsvorrichtung einer Kupplung sowie wenigstens eines weiteren Inkrementalwegsensors in einer elektronisch gesteuerten Betätigungsvorrichtung eines Getriebes in einem Fahrzeugantriebsstrang nach einem Reset, insbesondere Unterspannungsreset, enthaltend folgende Schritte:

- vollständiges öffnen der Kupplung und Referenzieren des der Kupplungsbetätigungsvorrichtung zugeordneten Inkrementalwegsensors in der voll geöffneten Stellung der Kupplung,
- Beibehalten der voll geöffneten Stellung der Kupplung und Refernzieren des (der) der Getriebebetätigungsvorrichtung zugeordneten Inkrementalwegsensors(en),
- Schalten des Getriebes in Neutralstellung und
- vollständiges Schließen der Kupplung und Referenzieren des der Kupplungsbetätigungsvorrichtung zugeordneten Inkrementalwegsensors in der voll geschlossenen Stellung der Kupplung.

**12.** Verfahren nach einem der Ansprüche 1 bis 11, welches Verfahren für die Kupplungen eines Parallelschaltgetriebes durchgeführt wird.

**13.** Vorrichtung zum Referenzieren eines Inkrementalwegsensors (23) in einer elektronisch gesteuerten Betätigungsvorrichtung (10, 24) einer Kupplung (22) im Antriebsstrang eines Fahrzeugs, welche Betätigungsvorrichtung einen Mikroprozessor mit einer Speichereinrichtung enthält, in der eine Kennlinie gespeichert ist, die das Kupplungsmoment abhängig von der Stellung eines Betätigungselements (20) angibt, und an den der Inkrementalwegsensor, weitere Sensoren und wenigstens ein Aktor (10) der Betätigungsvorrichtung angeschlossen sind, wobei in der Speichereinrichtung Programme derart enthalten sind, dass die Vorrichtung wenigstens eines der Verfahren nach einem der Ansprüche 1 bis 12 ausführt.

Fig. 1

Fig. 2

```
┌─────────────────────┐
│   Referenzierung    │──────── 40
└─────────────────────┘
           │
           ▼
┌─────────────────────┐
│  Bestimmen nGE      │──────── 42
└─────────────────────┘
           │
           ▼          44
        ◇◇◇◇◇                       ┌──────────────────────┐
      ◇ korrekt ◇──── nein ──────►  │   Referenzierung     │──── 56
        ◇◇◇◇◇                       │   über Anschlag      │
           │                        └──────────────────────┘
          ja        46                         │
        ◇◇◇◇◇                                  ▼
      ◇ S>SGW ◇──── nein            ┌──────────────────────┐
        ◇◇◇◇◇                       │        Ende          │
           │                        └──────────────────────┘
          ja
┌─────────────────────┐
│   MK =|MM−Jω̇|       │──────── 48
└─────────────────────┘
           │
           ▼
┌─────────────────────┐
│  Bestimmen Xakt     │──────── 50
└─────────────────────┘
           │
           ▼
┌─────────────────────┐
│  Setzen MK = Makt   │──────── 52
└─────────────────────┘
           │
           ▼
┌─────────────────────┐
│       Ende          │──────── 54
└─────────────────────┘
```

Fig. 3

Fig. 4

Fig. 5